(19) Europäisches Patentamt
European Patent Office
Office européen des brevets

(11) **EP 4 137 837 A1**

(12) **EUROPÄISCHE PATENTANMELDUNG**

(43) Veröffentlichungstag:
**22.02.2023  Patentblatt 2023/08**

(21) Anmeldenummer: **22190909.6**

(22) Anmeldetag: **18.08.2022**

(51) Internationale Patentklassifikation (IPC):
*G01S 5/00* (2006.01)      *G01S 5/02* (2006.01)
*G01S 19/48* (2010.01)

(52) Gemeinsame Patentklassifikation (CPC):
**G01S 19/48; G01S 5/0263;** G01S 5/0072

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **19.08.2021  DE 102021209126**

(71) Anmelder: **Deutsches Zentrum für Luft- und
Raumfahrt e.V.
53227 Bonn (DE)**

(72) Erfinder:
• **Grundhöfer, Lars
  53227 Bonn (DE)**
• **Arias Medina, Daniel
  53227 Bonn (DE)**

(74) Vertreter: **Zucker, Volker
Patentanwälte Bressel und Partner mbB
Potsdamer Platz 10
10785 Berlin (DE)**

(54) **VERFAHREN UND VORRICHTUNG ZUM BESTIMMEN EINER POSITION EINES SCHIFFES**

(57)    Die Erfindung betrifft ein Verfahren zum Bestimmen einer Position (20) eines Schiffes (x1,x2,x3,x4), umfassend Empfangen von Satellitensignalen (10) eines Globalen Navigationssatellitensystems, Empfangen von R-Mode-Signalen (11) von ortsfesten Basisstationen (a1,a2) und/oder von R-Mode-Signalen (11), die von anderen Schiffen (x1,x2,x3,x4) ausgestrahlt werden, Bestimmen der Position (20) des Schiffes (x1,x2,x3,x4) ausgehend von den empfangenen Satellitensignalen (10) und den empfangenen R-Mode-Signalen (11), Ausgeben der bestimmten Position (20). Ferner betrifft die Erfindung eine Vorrichtung (1) zum Bestimmen einer Position (20) eines Schiffes (x1,x2,x3,x4).

Fig. 2

**Beschreibung**

Die Erfindung betrifft ein Verfahren und eine Vorrichtung zum Bestimmen einer Position eines Schiffes.

Für die kommerzielle Schifffahrt ist sicheres Navigieren enorm wichtig. Hierzu bedarf es einer genauen Positionslösung, welche auf Grundlage von Globalen Navigationssatellitensystemen (GNSS, z.B. GPS) erstellt wird. Darüber hinaus ist auch die zeitliche Synchronisierung der verschiedenen Schiffe nötig. Diese Funktionen werden als Position, Navigation und Timing (PNT) zusammengefasst. Ist der GNSS-Empfang gestört, werden alternative Verfahren benötigt, um eine sichere Schifffahrt aufrechterhalten zu können. Gestörter GNSS-Empfang stellt nicht nur in der Schifffahrt ein Problem dar, sondern tritt auch häufig in urbanen Umgebungen auf.

Für die urbane Navigation werden zurzeit verschiedene Ansätze der Kooperativen Navigation diskutiert. Für den Fall, dass ein Teilnehmer ein unzureichendes Signal via GNSS empfängt, kann der Ansatz der Kooperativen Navigation die Positionsgenauigkeit verbessern. Dies wird durch die Kommunikation verschiedener Teilnehmer erreicht. Jeder Teilnehmer teilt hierbei seine momentane Position mit den anderen Teilnehmern; weiterhin ist es notwendig, eine Entfernung zwischen den Teilnehmern zu bestimmen. Eine besondere Art von Teilnehmern stellen hierbei Ankerpunkte da. Dies sind Festpunkte, deren Positionen besonders genau bekannt sind und die sicherstellen sollen, dass eine Mindestanzahl an Teilnehmern vorhanden ist. Momentan konzentriert sich die Forschung darauf, diese Art der Navigation mithilfe von 5G durchzuführen.

Im maritimen Bereich soll der GNSS-Ausfall durch terrestrische Systeme kompensiert werden. Derzeit befindet sich das R-Mode-System in der Erprobung. Hierbei werden Signale in zwei verschiedenen Frequenzbändern benutzt. Zum einen werden im Mittelfrequenzbereich Phasenschätzungen genutzt. Zum anderen werden im Very High Frequency (VHF)-Bereich Code-Positionierungen mit Automatic Identification System (AIS)- oder VHF Data Exchange System (VDES)-Nachrichten vorgenommen. Mit dem R-Mode Baltic Testbed existiert ein funktionierendes Testfeld für das R-Mode System.

Aus L. Grundhöfer und S. Gewies, R-Mode receiver development for medium frequency signals, Scientific Journals of the Maritime University of Szczecin 56 (128), S. 57-62, 2018, ist ein R-Mode-Empfänger bekannt.

Aus M. Wirsing, A. Dammann und R. Raulefs, Designing a Ranging Signal for use with VDE R-Mode, 2020 IEEE/ION Position, Location and Navigation Symposium (PLANS), 2020, Seiten 822-826, doi: 10.1109/PLANS46316.2020.9109855, ist ein Beispiel für ein R-Mode-Signal zur Entfernungsbestimmung bekannt.

Der Erfindung liegt die Aufgabe zu Grunde, ein Verfahren und eine Vorrichtung zum Bestimmen einer Position eines Schiffes zu verbessern.

Die Aufgabe wird erfindungsgemäß durch ein Verfahren mit den Merkmalen des Patentanspruchs 1 und eine Vorrichtung mit den Merkmalen des Patentanspruchs 5 gelöst. Vorteilhafte Ausgestaltungen der Erfindung ergeben sich aus den Unteransprüchen.

Insbesondere wird ein Verfahren zum Bestimmen einer Position eines Schiffes zur Verfügung gestellt, umfassend: Empfangen von Satellitensignalen eines Globalen Navigationssatellitensystems, Empfangen von R-Mode-Signalen von ortsfesten Basisstationen und/oder von R-Mode-Signalen, die von anderen Schiffen ausgestrahlt werden, Bestimmen der Position des Schiffes ausgehend von den empfangenen Satellitensignalen und den empfangenen R-Mode-Signalen, Ausgeben der bestimmten Position.

Ferner wird insbesondere eine Vorrichtung zum Bestimmen einer Position eines Schiffes geschaffen, umfassend einen Satellitenempfänger, der eingerichtet ist zum Empfangen von Satellitensignalen eines Globalen Navigationssatellitensystems, einen R-Mode-Empfänger, der eingerichtet ist zum Empfangen von R-Mode-Signalen von ortsfesten Basisstationen und/oder von R-Mode-Signalen, die von anderen Schiffen ausgestrahlt werden, und eine Auswertungseinrichtung, wobei die Auswertungseinrichtung dazu eingerichtet ist, die Position des Schiffes ausgehend von den empfangenen Satellitensignalen und den empfangenen R-Mode-Signalen zu bestimmen und die bestimmte Position auszugeben.

Das Verfahren und die Vorrichtung ermöglichen es, eine verbesserte Kooperative Navigation im maritimen Bereich bereitzustellen. Eine Position eines Schiffes kann hierbei verbessert bestimmt werden, da nicht nur Satellitensignale von Satelliten des Globalen Navigationssatellitensystems, sondern darüber hinaus auch R-Mode-Signale eines R-Mode-Systems empfangen und berücksichtigt werden. Einer der Kerngedanken der Erfindung ist hierbei, dass nicht nur R-Mode-Signale von ortsfesten Basisstationen, sogenannten Ankerpunkten, die insbesondere auf dem Festland angeordnet sind, empfangen und berücksichtigt werden, sondern auch R-Mode-Signale, die von anderen Schiffen ausgestrahlt werden und die die jeweiligen Positionen der anderen Schiffe beinhalten. Insbesondere in stark befahrenen Gebieten steht hierdurch eine Vielzahl von Signalen bereit, die zum Bestimmen der Position verwendet werden können, sodass hierdurch eine Genauigkeit und eine Resilienz gegen Störungen beim Bestimmen der Position verbessert werden kann.

Teile der Vorrichtung, insbesondere die Auswertungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind.

R-Mode (Abkürzung für Ranging Mode) ist ein maritimes terrestrisches Navigationssystem. Es ermöglicht eine Positionierung und eine Zeitvorgabe (engl. timing) auf dem Wasser bis zu Distanzen von einigen Hundert Kilometern von der Küste entfernt, sofern eine ausreichende Anzahl an R-Mode-Signalen zur Verfügung steht. Es wurde als eine Ergänzung zu Globalen Navigationssatellitensystemen (GNSS) entwickelt, sodass ein schiffsbasierter Empfänger ausgehend von mehreren Systemen eine zuverlässige Positionierung, Navigation und Zeitvorgabe für den maritimen Betrieb bereitstellen kann. R-Mode ist insbesondere eine Technologie, die vorhandene maritime differentielle GPS (DGPS)-Navigationsstationen (maritime radio beacon) oder AIS-Basisstationen zur Übertragung von Entfernungsinformationen durch Hinzufügen von Signalen zum herkömmlichen Sendeschema nutzt.

Insbesondere arbeitet R-Mode im Mittelfrequenzbereich (MF) als maritime Funkbake (engl. radio beacon) bzw. ortsfeste Basisstation. Insbesondere können hierbei Funkbaken bzw. ortsfeste Basisstationen des Automatic Identification System (AIS), welche im Very High Frequeny (VHF)-Band arbeiten, derart angepasst werden, dass diese synchronisierte R-Mode-Signale ausstrahlen. Insbesondere werden bei R-Mode Signale in zwei verschiedenen Frequenzbändern benutzt. Insbesondere werden zum einen im Mittelfrequenzbereich Phasenschätzungen von zwei Trägern, insbesondere Dauerstrich/CW-Trägern, genutzt, um (Pseudo-)Distanzen zum Sender zu schätzen. Hierzu werden am Empfänger die Phasen durch das Verfahren der größten Wahrscheinlichkeit oder der Geringsten Fehler geschätzt. Der Abstand wird dann aus der Propagationsgeschwindigkeit und der Wellenlänge berechnet. Insbesondere können ortsfeste Basisstationen hierbei als DGPS-Navigationsstationen ausgebildet sein, die niederratige differentielle Korrekturen für GNSS im Mittelwellenbereich um 300 kHz bieten. Zum anderen werden insbesondere im VHF-Bereich Code-Positionierungen mit Automatic Identification System (AIS)- oder VHF Data Exchange System (VDES)-Nachrichten vorgenommen. Hierzu werden synchronisierte Navigationsnachrichten im VHF-Kommunikationskanal ausgesendet, deren Laufzeit durch eine Korrelations-Operation am Empfänger bestimmt wird. Eine Positionierung des Schiffes bzw. des Empfängers ist dann mit Hilfe der R-Mode-Signale möglich, wenn mindestens drei R-Mode-Signale vorhanden sind. Mit dem R-Mode Baltic Testbed existiert ein funktionierendes Testfeld für das R-Mode System.

Die Vorrichtung kann insbesondere eine PNT-Datenverarbeitungseinheit sein oder Teil einer PNT-Datenverarbeitungseinheit sein.

Beim Bestimmen der Position des Schiffes können insbesondere auch Schätzer, wie beispielsweise ein Kalman-Filter, verwendet werden.

Nachfolgend wird die Vorgehensweise zur Durchführung einer Kooperativen Navigation unter Nutzung von R-Mode beispielhaft näher beschrieben. Das Signalmodell in einem allgemeinen kooperativen Szenario geht von $A$ ortsfesten R-Mode-Basisstationen, deren Positionen $p_a$ bekannt sind, und M Schiffen (oder Agenten) aus, deren Positionen $p_m$ und Empfängerzeitgeberfehler $b_m$ unbekannt sind. Ferner sind GNSS-Beobachtungen verfügbar, sodass $S$ Satelliten von den Schiffen verfolgt (getrackt) werden (nicht notwendigerweise gleichzeitig). Jeder Agent m empfängt R-Mode-Signale von einer Anzahl von R-Mode-Basisstationen, tauscht insbesondere R-Mode-Signale mit anderen Schiffen aus und verfolgt eine Menge von Satelliten. Daher werden im folgenden $\mathcal{A}_m$, $\mathcal{M}_m$ und $\mathcal{S}_m$ verwendet, um Untermengen der Basisstationen, der Schiffe bzw. der Satelliten zu bezeichnen, von denen das $m$-te Schiff Informationen (Ortungsinformationen) bezieht. Die Anzahl der Elemente in den genannten Untermengen sind entsprechend $A_m$, $M_m$ und $S_m$.

Es können basierend auf einer beobachteten Entfernung des Agenten m zu den Satelliten (s), Ankern (Basisstationen, a) und anderen Agenten (n) drei Arten von Messungen unterschieden werden:

$$r_{s \to m} = \| \mathrm{p}_s - \mathrm{p}_m \| + b_m + \varepsilon_{s \to m}$$

$$r_{a \to m} = \| \mathrm{p}_a - \mathrm{p}_m \| + \varepsilon_{a \to m}$$

$$r_{n \to m} = \| \mathrm{p}_n - \mathrm{p}_m \| + \varepsilon_{n \to m}$$

wobei $p_{(\cdot)}$, $\varepsilon_{(\cdot) \to m}$ die Position bzw. ein Beobachtungsrauschen für $(\cdot) = \{s \in \mathcal{S}_m, a \in \mathcal{A}_m, n \in \mathcal{M}_m\}$ sind. Das jeweilige Beobachtungsrauschen wird als unabhängig von dem Beobachtungsrauschen anderer Beobachtungen angenommen und es wird ferner angenommen, dass das Beobachtungsrauschen jeweils einer Normalverteilung mit dem Mittelwert Null folgt:

$$\varepsilon_{(\cdot)\to m}\sim\mathcal{N}(0,\sigma^2_{(\cdot)\to m})$$

Für das *m*-te Schiff werden die unbekannten Parameter $\mathbf{x}_m$ und die Beobachtungen $\mathbf{y}_m$ wie folgt ausgedrückt:

$$\mathbf{x}_m = [\mathbf{p}_m^{\mathrm{T}}, b_m]^{\mathrm{T}} \; , \mathbf{x}_m \in \mathbb{R}^{(D+1)}$$

$$\mathbf{y}_m = \left[\mathbf{r}_{\mathcal{S}_m}^{\mathrm{T}}, \mathbf{r}_{\mathcal{A}_m}^{\mathrm{T}}, \mathbf{r}_{\mathcal{M}_m}^{\mathrm{T}}\right]^{\mathrm{T}} \; , \mathbf{y}_m \in \mathbb{R}^{S_m+A_m+M_m}$$

wobei D die Dimension des Positionsvektors beinhaltet (für eine zweidimensionale oder dreidimensionale Ortung bzw. Positionierung).

Alle Unbekannten können in Form eines gemeinsamen (vertikal übereinander gestapelten) Vektors der Parameter für alle Schiffe, die an dem gebildeten Navigationsnetzwerk teilnehmen, ausgedrückt werden:

$$\mathbf{X} = \left[\mathbf{x}_1^{\mathrm{T}}, ..., \mathbf{x}_M^{\mathrm{T}}\right]^{\mathrm{T}} \; , \text{mit } \mathbf{X} \in \mathbb{R}^{(D+1)M}$$

In gleicher Weise können sämtliche Beobachtungen ausgedrückt werden als

$$\mathbf{Y} = \left[\boldsymbol{\rho}_{\mathcal{S}_1}^{\mathrm{T}}, ..., \boldsymbol{\rho}_{\mathcal{S}_M}^{\mathrm{T}}, \mathbf{r}_{\mathcal{A}_1}^{\mathrm{T}}, ..., \mathbf{r}_{\mathcal{A}_M}^{\mathrm{T}}, \mathbf{r}_{\mathcal{M}_1}^{\mathrm{T}}, ..., \mathbf{r}_{\mathcal{M}_M}^{\mathrm{T}}\right]^{\mathrm{T}} \; , \text{mit } \mathbf{Y} \in \mathbb{R}^{\Sigma_i(S_i+A_i+M_i)}$$

und die Kovarianzmatrix R beschreibt die Dispersion $\mathbb{D}$ (oder das Dispersionsmodell) über eine Menge von Beobachtungen

$$\mathbf{R} \cong \mathbb{D}(\mathbf{Y}) = \begin{bmatrix} \mathbf{R}_\rho & \\ & \mathbf{R}_r \end{bmatrix}$$

wobei $R_\rho$ und $R_r$ die Kovarianzmatrizen für die GNSS bzw. die terrestrischen Beobachtungen sind, deren Diagonalen mit der oben angegebenen Normalverteilung übereinstimmen. Allgemein gilt, dass eine Kreuzkorrelation über die Beobachtungen hinweg vorhanden sein kann, insbesondere im Fall von GNSS-Beobachtungen, bei denen mehrere Schiffe den gleichen Satelliten empfangen bzw. verfolgen (tracken).

Nachfolgend wird beispielhaft erläutert, wie das Problem der Positionsschätzung für den R-Mode im kooperativen Modus (kooperative Lokalisation / Ortung / Navigation) gelöst wird.

Die Positionsbestimmung in kollaborativen Netzwerken ist ein Schätzproblem, das aus unterschiedlichen Richtungen betrachtet werden kann, und daher können Verfahren zum Lösen des Schätzproblems nach unterschiedlichen Kategorien unterschieden werden. Typischerweise wird das Problem von jedem Schiff lokal gelöst, sodass sich das folgende Optimierungsproblem ergibt:

$$\hat{\mathbf{x}}_m = \arg\min_{\mathbf{x}_m} \left\{ \sum_{s\in\mathcal{S}_m} \frac{1}{\sigma^2_{s\to m}} (\rho_{s\to m} - \|\mathbf{p}_s - \mathbf{p}_m\|^2 - b_m) + \sum_{a\in\mathcal{A}_m} \frac{1}{\sigma^2_{a\to m}} (r_{a\to m} - \|\mathbf{p}_a - \mathbf{p}_m\|^2) + \right.$$

$$\left. \sum_{n\in\mathcal{M}_m} \frac{1}{\hat{\sigma}^2_{n\to m}} (r_{n\to m} - \|\mathbf{p}_n - \mathbf{p}_m\|^2) \right\}$$

wobei es hierbei notwendig ist, dass die Positionsvektoren $\mathbf{p}_n \in \mathcal{M}_m$ von anderen Schiffen bekannt sind. Diese Positionsvektoren werden mittels R-Mode übermittelt, das einen doppelten Dienst bereitstellt: das Bereitstellen von Ortungsinformationen (zur Entfernungsbestimmung) und einen Kommunikationskanal. Dieser Kommunikationskanal erlaubt es, benachbarten Schiffen eine aktuell geschätzte Position eines Schiffes und ein zugehöriges Unsicherheitsmaß (z.B. die Kovarianz $\hat{\mathbf{P}}_n$) zu übermitteln. Wegen dieser zusätzlichen Unsicherheit über die Position der anderen Schiffe wird im letzten Term des Optimierungsproblems das Maß $\tilde{\sigma}^2_{n \to m}$ verwendet, das wie folgt definiert ist

$$\tilde{\sigma}_{n \to m} = \sigma_{n \to m} + \sqrt{\text{tr}\left(\hat{\mathbf{P}}_n\right)}$$

wobei $\text{tr}(\cdot)$ der Matrixspuroperator ist. Das Optimierungsproblem kann beispielsweise mittels eines Bayeschen Schätzers gelöst werden, wie dies im nachfolgenden Algorithmus skizziert ist.

---

**Algorithmus**: Bayessches Lösungsverfahren für das Lokalisierungsproblem im kooperativen R-Mode Szenario

---

**Eingabe**: Beobachtungen und zugehörige Kovarianzen: $\mathbf{y}_m$, $\mathbf{R}_m$. Positionen anderer Schiffe und deren Kovarianzen(via R-Mode Kommunikation): $\hat{\mathbf{x}}_n, \hat{\mathbf{P}}_n$

**Ausgabe**: Geschätzte Position für das $m$-te Schiff und eine zugehörige Unsicherheit: $\hat{\mathbf{x}}_m, \hat{\mathbf{P}}_m$

1     Initialisierung durch GNSS-Daten: $\left\{\mathbf{x}^0_m, \mathbf{P}^0_m \leftarrow WLS(\rho_m, \mathbf{R}_{\rho,m})\right\}$

2     Modifiziere das Rauschen auf $n \to m$ gemäß $\tilde{\sigma}_{n \to m}$

**for** i = 0,...**to** *converge* **do**

3     | Linearisiere Beobachtungsmodell

|     $\mathbf{H}^i = \nabla h(\mathbf{x}^i_m)$

4     | Erzeuge Gainmatrix

|     $\mathbf{K}^i = \mathbf{P}^0_m \mathbf{H}^i \left(\mathbf{H}^i \mathbf{P}^0_m \mathbf{H}^{i^T} + \mathbf{R}_m\right)^{-1}$

5     | Aktualisiere Schätzwerte

|     $\mathbf{x}^{i+1}_m = \mathbf{x}^i_m + \mathbf{K}^i(\mathbf{y}_m - h(\mathbf{x}^i_m) - \mathbf{H}^i(\mathbf{x}^0_m - \mathbf{x}^i_m))$

**end**

6     Ausgabe Schätzwerte:

$\hat{\mathbf{x}}_m = \mathbf{x}^{i+1}_m$

$\hat{\mathbf{P}}_m = (\mathbf{I} - \mathbf{K}^i \mathbf{H}^i)\mathbf{P}^0_m(\mathbf{I} - \mathbf{K}^i \mathbf{H}^i)^T + \mathbf{K}^i \mathbf{R}_m \mathbf{K}^{i^T}$

---

*Anmerkung: WLS steht für Weighted Least Squares (dt. gewichtete Methode der kleinsten Fehler)*

Der Algorithmus wird insbesondere mittels der Auswertungseinrichtung ausgeführt. Die "Beobachtungen" erfolgen mittels des Satellitenempfängers und des R-Mode-Empfängers. Die Positionen der anderen Schiffe werden insbesondere mittels des Kommunikationskanals von R-Mode übermittelt und empfangen.

In einer Ausführungsform ist vorgesehen, dass die bestimmte Position des Schiffes als R-Mode-Signal ausgestrahlt wird. Hierdurch kann das bestimmte bzw. geschätzte Signal benachbarten Schiffen zur Verfügung gestellt werden, sodass diese das geschätzte Signal bei der Ortung bzw. Positionsbestimmung berücksichtigen können. Übermitteln alle Schiffe ihre jeweils bestimmten Positionen als R-Mode-Signal, so kann ein Navigationsnetzwerk geschaffen werden, in dem eine Vielzahl von Schiffen zur Positionsbestimmung verwendet werden kann. Je mehr Schiffe an dem Netzwerk beteiligt sind, desto genauer und zuverlässiger kann eine Positionsbestimmung für jedes einzelne Schiff innerhalb des Navigationsnetzwerkes werden.

In einer Ausführungsform der Vorrichtung ist entsprechend vorgesehen, dass die Vorrichtung einen R-Mode-Sender umfasst, wobei der R-Mode-Sender dazu eingerichtet ist, die bestimmte Position des Schiffes als R-Mode-Signal auszustrahlen. Die bestimmte Position wird insbesondere über den Kommunikationskanal von R-Mode übermittelt.

In einer Ausführungsform ist vorgesehen, dass die Satellitensignale und die R-Mode-Signale beim Bestimmen der Position des Schiffes gewichtet berücksichtigt werden, wobei eine Gewichtung in Abhängigkeit einer jeweils zugehörigen Unsicherheit des Signals festgelegt wird. Insbesondere kann eine Gewichtung umso kleiner gewählt werden, je größer eine Unsicherheit ist und umgekehrt.

In einer Ausführungsform ist vorgesehen, dass die R-Mode-Signale bei einer Störung eines Empfangs des Globalen Navigationssatellitensystems beim Bestimmen der Position stärker gewichtet werden. Hierdurch kann eine Unsicherheit beim Empfangen von Satellitensignalen kompensiert werden. Insbesondere kann dies erfolgen, wenn beispielsweise eine ausreichende Anzahl von Satelliten zur satellitengestützten Positionsbestimmung nicht zur Verfügung steht, wenn beispielsweise Satellitensignale von nur ein oder zwei Satelliten empfangen werden. Diese Satellitensignale werden dann trotzdem beim Bestimmen der Position des Schiffes berücksichtigt, jedoch mit geringerer Gewichtung, wobei eine Gewichtung der R-Mode-Signale bzw. Beobachtungen via R-Mode erhöht wird.

In einer Ausführungsform ist vorgesehen, dass die Position bei einem Ausfall des Globalen Navigationssatellitensystems ausgehend von den empfangenen R-Mode-Signalen bestimmt wird. Der Begriff Ausfall soll hierbei insbesondere die Fälle umfassen, in denen eine Signalqualität der Satellitensignale nicht ausreichend ist, um diese beim Bestimmen der Position zu berücksichtigen und in denen das Globale Navigationssatellitensystem nicht mehr funktionstüchtig ist. Hierdurch kann auch bei Ausfall des Globalen Navigationssatellitensystems weiter zuverlässig eine Position des Schiffes bestimmt werden. Insbesondere durch Berücksichtigung der empfangenen Positionen der anderen Schiffe kann das Bestimmen der Position des Schiffes weiterhin zuverlässig durchgeführt werden. Insbesondere in stark befahrenen Gebieten an den Küsten und auf dem offenen Meer, wo eine Vielzahl von Schiffen in großer Dichte verkehrt, lässt sich auf diese Weise zuverlässig eine Position des Schiffes bestimmen.

Es wird ferner auch ein Schiff geschaffen, umfassend mindestens eine Vorrichtung nach einer der beschriebenen Ausführungsformen.

Weiter wird auch ein Navigationsnetzwerk geschaffen, umfassend ein Globales Navigationssatellitensystem, ortsfeste Basisstationen, die eingerichtet sind, um R-Mode-Signale auszustrahlen, wobei die Basisstationen miteinander synchronisiert sind, und Schiffe, wobei die Schiffe jeweils mindestens eine Vorrichtung nach einer der beschriebenen Ausführungsformen umfassen und jeweils R-Mode-Signale mit einer jeweiligen Position ausstrahlen.

Nachfolgend wird die Erfindung anhand bevorzugter Ausführungsbeispiele unter Bezugnahme auf die Figuren näher erläutert. Hierbei zeigen:

Fig. 1     eine schematische Darstellung einer Ausführungsform der Vorrichtung zum Bestimmen einer Position eines Schiffes;

Fig. 2     eine schematische Darstellung einer maritimen Situation zur Verdeutlichung der Erfindung;

Fig. 3     eine schematische Darstellung der mittels einer Simulation für die in der Fig. 2 dargestellte maritime Situation bestimmten Positionen von zwei Schiffen sowie deren Unsicherheiten im Vergleich zwischen GNSS und GNSS und R-Mode;

Fig. 4     ein schematisches Ablaufdiagramm einer Ausführungsform des Verfahrens zum Bestimmen einer Position eines Schiffes.

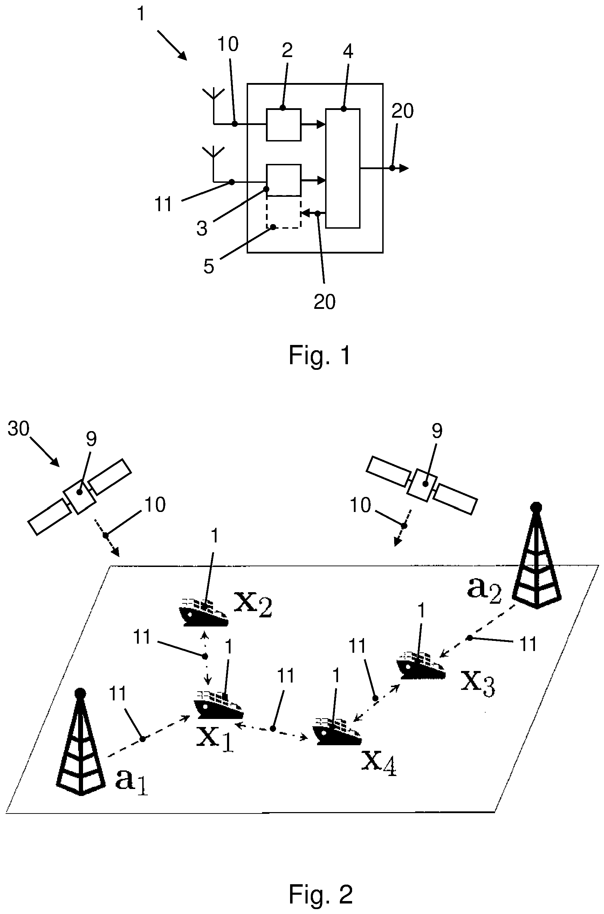

In Fig. 1 ist eine schematische Darstellung einer Ausführungsform der Vorrichtung 1 zum Bestimmen einer Position 20 eines Schiffes gezeigt. Die Vorrichtung 1 umfasst einen Satellitenempfänger 2, einen R-Mode-Empfänger 3 und eine Auswertungseinrichtung 4. Die Vorrichtung 1 kann beispielsweise als PNT-Datenverarbeitungseinheit oder als Teil einer solchen PNT-Datenverarbeitungseinheit ausgebildet sein.

Der Satellitenempfänger 2 ist dazu eingerichtet, Satellitensignale 10 von Satelliten eines Globalen Navigationssatellitensystems zu empfangen. Das Globale Navigationssatellitensystem kann beispielsweise das Global Positioning System (GPS) sein.

Der R-Mode-Empfänger 3 ist dazu eingerichtet, R-Mode-Signale 11 von ortsfesten Basisstationen und/oder R-Mode-Signale 11, die von anderen Schiffen ausgestrahlt werden, zu empfangen. Hierbei erfolgt insbesondere eine Entfernungsmessung über R-Mode zu den ortsfesten Basisstationen und/oder zu den anderen Schiffen. Die jeweilige Position wird mittels des Kommunikationskanals von R-Mode empfangen. Neben den Positionen wird auch eine jeweils zugehörige Unsicherheit empfangen.

Die Auswertungseinrichtung 4 ist dazu eingerichtet, die Position 20 des Schiffes ausgehend von den empfangenen Satellitensignalen 10 und den empfangenen R-Mode-Signalen 11 zu bestimmen und die bestimmte Position 20 auszugeben. Die Auswertungseinrichtung 4 umfasst hierzu eine Recheneinrichtung und einen Speicher (beides nicht gezeigt), um die zum Bestimmen der Position 20 notwendigen Rechenoperationen ausführen zu können. Das Bestimmen der Position 20 erfolgt beispielsweise mittels des in der allgemeinen Beschreibung beschriebenen Algorithmus.

Es kann vorgesehen sein, dass die Vorrichtung 1 einen R-Mode-Sender 5 umfasst, wobei der R-Mode-Sender dazu eingerichtet ist, die bestimmte Position 20 des Schiffes als R-Mode-Signal 11 auszustrahlen.

Es kann vorgesehen sein, dass die Auswertungseinrichtung 4 ferner dazu eingerichtet ist, die R-Mode-Signale 11 bei einer Störung eines Empfangs des Globalen Navigationssatellitensystems beim Bestimmen der Position 20 stärker zu gewichten.

Es kann weiter vorgesehen sein, dass die Auswertungseinrichtung 4 ferner dazu eingerichtet ist, die Position 20 bei einem Ausfall des Globalen Navigationssatellitensystems ausgehend von den empfangenen R-Mode-Signalen 11 zu bestimmen. Insbesondere kann die Position 20 auch ausschließlich auf Grundlage der empfangenen R-Mode-Signale 11 bestimmt werden.

In Fig. 2 ist eine schematische Darstellung einer maritimen Situation zur Verdeutlichung der Erfindung anhand einer Simulation gezeigt. Dargestellt sind ein Globales Satellitennavigationssystem 9, zwei R-Mode-Ankerpunkte a1, a2 in Form von ortsfesten Basisstationen sowie vier Schiffe x1, x2, x3, x4. Jedes der Schiffe x1, x2, x3, x4 weist beispielsweise eine Vorrichtung 1 auf, wie diese mit Bezug auf die Fig. 1 beschrieben ist. Gemeinsam bilden das Globale Navigationssatellitensystem 9, die Ankerpunkte a1, a2 und die Schiffe x1, x2, x3, x4 mit den Vorrichtungen 1 ein Navigationsnetzwerk 30.

Die Ankerpunkte a1, a2 übermitteln jeweils R-Mode-Signale 11, die eine jeweilige Position umfassen. Auch die Schiffe x1, x2, x3, x4 übermitteln eine jeweilige Position, indem R-Mode-Signale 11 ausgestrahlt werden. Alle Schiffe x1, x2, x3, x4 bestimmen ihre jeweilige Position mit Hilfe von Satellitensignalen 10 und den R-Mode-Signalen 11 der Ankerpunkte a1, a2 und der (jeweils anderen) Schiffe x1, x2, x3, x4.

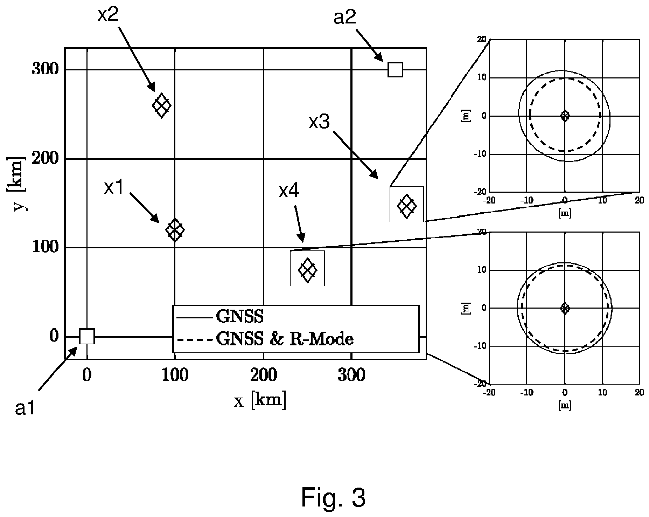

Entsprechend der in der Fig. 2 dargestellten maritimen Situation sind in der Fig. 3 beispielhaft mittels des in der allgemeinen Beschreibung offenbarten Algorithmus bestimmte bzw. geschätzte Positionen der Schiffe x3 und x4 dargestellt, zusammen mit Angaben zur jeweiligen Unsicherheit (vgl. vergrößerte Ausschnitte auf der rechten Seite von Fig. 3). Es ist in den vergrößerten Ausschnitten zu erkennen, dass eine Unsicherheit durch das Bestimmen der Position unter Verwendung sowohl der Satellitensignale als auch der R-Mode-Signale ("GNSS & R-Mode") gegenüber dem Bestimmen der Position unter Verwendung nur der Satellitensignale ("GNSS") verringert werden kann. So verringert sich die Unsicherheit für das Schiff x3 von 12,38 m ("GNSS") auf 9,84 m ("GNSS & R-Mode").

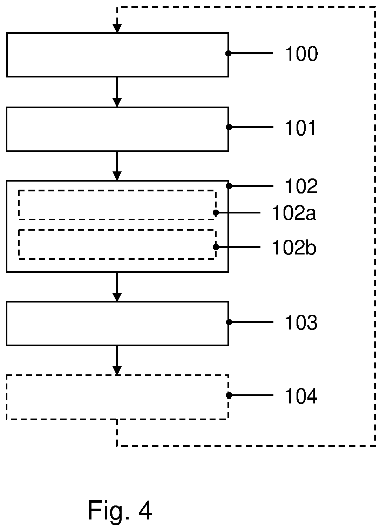

In der Fig. 4 ist ein schematisches Ablaufdiagramm einer Ausführungsform des Verfahrens zum Bestimmen einer Position eines Schiffes gezeigt.

In einer Maßnahme 100 werden Satellitensignale eines Globalen Navigationssatellitensystems empfangen.

In einer Maßnahme 101 werden R-Mode-Signale von ortsfesten Basisstationen und/oder R-Mode-Signale, die von anderen Schiffen ausgestrahlt werden, empfangen.

In einer Maßnahme 102 wird die Position des Schiffes ausgehend von den empfangenen Satellitensignalen und den empfangenen R-Mode-Signalen mittels einer Auswertungseinrichtung bestimmt. Hierbei wird insbesondere der in der allgemeinen Beschreibung offenbarte Algorithmus verwendet. Es kann hierbei vorgesehen sein, dass Schätzer verwendet werden, wie beispielsweise ein Kalman-Filter, um die Position fortlaufend zu schätzen.

In einer Maßnahme 103 wird die bestimmte Position ausgegeben, beispielsweise als analoges Signal oder digitales Signal, beispielsweise als Datenpaket. Die bestimmte Position wird dann beispielsweise einer Navigationseinrichtung des Schiffes zugeführt.

Es kann in einer Maßnahme 104 vorgesehen sein, dass die bestimmte Position des Schiffes als R-Mode-Signal ausgestrahlt wird. Dies erfolgt insbesondere über den Kommunikationskanal von R-Mode.

Es kann in einer Maßnahme 102a im Rahmen der Maßnahme 102 vorgesehen sein, dass die R-Mode-Signale bei einer Störung eines Empfangs des Globalen Navigationssatellitensystems beim Bestimmen der Position stärker gewichtet werden. Es kann hierbei auch vorgesehen sein, dass eine Gewichtung von Satellitensignalen einzelner Satelliten geändert, insbesondere verringert wird.

Es kann in einer Maßnahme 102b im Rahmen der Maßnahme 102 vorgesehen sein, dass die Position bei einem Ausfall des Globalen Navigationssatellitensystems ausgehend von den empfangenen R-Mode-Signalen bestimmt wird. Insbesondere wird hierzu überprüft, ob Satellitensignale von einer ausreichenden Anzahl von Satelliten empfangen werden können. Ist dies nicht der Fall oder können überhaupt keine Satelliten empfangen werden, so werden beim Bestimmen der Position des Schiffes nur die R-Mode-Signale berücksichtigt.

Es kann im Rahmen der Maßnahme 102 auch vorgesehen sein, dass die Satellitensignale und die R-Mode-Signale beim Bestimmen der Position des Schiffes gewichtet in Abhängigkeit einer jeweiligen Unsicherheit berücksichtigt werden.

Es ist insbesondere vorgesehen, dass die Maßnahmen des Verfahrens fortlaufend wiederholt werden, sodass stets eine aktuelle Position bestimmt bzw. geschätzt und bereitgestellt werden kann.

Bezugszeichenliste

| | |
|---|---|
| 1 | Vorrichtung |
| 2 | Satellitenempfänger |
| 3 | R-Mode-Empfänger |
| 4 | Auswertungseinrichtung |
| 5 | R-Mode-Sender |
| 9 | Globales Navigationssatellitensystem |
| 10 | Satellitensignal |
| 11 | R-Mode-Signal |
| 20 | Position |
| 30 | Navigationsnetzwerk |

a1  Ankerpunkt (ortsfeste Basisstation)
a2  Ankerpunkt (ortsfeste Basisstation)
x1  Schiff
x2  Schiff
x3  Schiff
x4  Schiff
100-104  Maßnahmen des Verfahrens

**Patentansprüche**

1. Verfahren zum Bestimmen einer Position (20) eines Schiffes (x1,x2,x3,x4), umfassend:

   Empfangen von Satellitensignalen (10) eines Globalen Navigationssatellitensystems,
   Empfangen von R-Mode-Signalen (11) von ortsfesten Basisstationen (a1,a2) und/oder von R-Mode-Signalen (11), die von anderen Schiffen (x1,x2,x3,x4) ausgestrahlt werden,
   Bestimmen der Position (20) des Schiffes (x1,x2,x3,x4) ausgehend von den empfangenen Satellitensignalen (10) und den empfangenen R-Mode-Signalen (11), Ausgeben der bestimmten Position (20).

2. Verfahren nach Anspruch 1, **dadurch gekennzeichnet, dass** die bestimmte Position (20) des Schiffes als R-Mode-Signal (11) ausgestrahlt wird.

3. Verfahren nach Anspruch 1 oder 2, **dadurch gekennzeichnet, dass** die R-Mode-Signale (11) bei einer Störung eines Empfangs des Globalen Navigationssatellitensystems beim Bestimmen der Position (20) stärker gewichtet werden.

4. Verfahren nach einem der vorangegangenen Ansprüche, **dadurch gekennzeichnet, dass** die Position (20) bei einem Ausfall des Globalen Navigationssatellitensystems ausgehend von den empfangenen R-Mode-Signalen (11) bestimmt wird.

5. Vorrichtung (1) zum Bestimmen einer Position (20) eines Schiffes (x1,x2,x3,x4), umfassend:

   einen Satellitenempfänger (2), der eingerichtet ist zum Empfangen von Satellitensignalen (10) eines Globalen Navigationssatellitensystems,
   einen R-Mode-Empfänger (3), der eingerichtet ist zum Empfangen von R-Mode-Signalen (11) von ortsfesten Basisstationen (a1,a2) und/oder von R-Mode-Signalen (11), die von anderen Schiffen (x1,x2,x3,x4) ausgestrahlt werden, und eine Auswertungseinrichtung (4), wobei die Auswertungseinrichtung (4) dazu eingerichtet ist, die Position (20) des Schiffes (x1,x2,x3,x4) ausgehend von den empfangenen Satellitensignalen (10) und den empfangenen R-Mode-Signalen (11) zu bestimmen und die bestimmte Position (20) auszugeben.

6. Vorrichtung (1) nach Anspruch 5, **gekennzeichnet durch** einen R-Mode-Sender (5), wobei der R-Mode-Sender (5) dazu eingerichtet ist, die bestimmte Position (20) des Schiffes (x1,x2,x3,x4) als R-Mode-Signal (11) auszustrahlen.

7. Vorrichtung (1) nach Anspruch 5 oder 6, **dadurch gekennzeichnet, dass** die Auswertungseinrichtung (4) ferner dazu eingerichtet ist, die R-Mode-Signale (11) bei einer Störung eines Empfangs des Globalen Navigationssatellitensystems beim Bestimmen der Position (20) stärker zu gewichten.

8. Vorrichtung (1) nach einem der Ansprüche 5 bis 7, **dadurch gekennzeichnet, dass** die Auswertungseinrichtung (4) ferner dazu eingerichtet ist, die Position (20) bei einem Ausfall des Globalen Navigationssatellitensystems ausgehend von den empfangenen R-Mode-Signalen (11) zu bestimmen.

9. Schiff (x1,x2,x3,x4), umfassend mindestens eine Vorrichtung (1) nach einem der Ansprüche 5 bis 8.

10. Navigationsnetzwerk (30), umfassend:

    ein Globales Navigationssatellitensystem (9),
    ortsfeste Basisstationen (a1,a2), die eingerichtet sind, um R-Mode-Signale (11) auszustrahlen, wobei die Basisstationen (a1,a2) miteinander synchronisiert sind, und Schiffe (x1,x2,x3,x4), wobei die Schiffe (x1,x2,x3,x4) jeweils mindestens eine Vorrichtung (1) nach einem der Ansprüche 5 bis 8 umfassen und jeweils R-Mode-Signale (11) mit einer jeweiligen Position (20) ausstrahlen.

Fig. 1

Fig. 2

Fig. 3

Fig. 4

Europäisches
Patentamt

European
Patent Office

Office européen
des brevets

**EUROPÄISCHER RECHERCHENBERICHT**

Nummer der Anmeldung

**EP 22 19 0909**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 108 562 923 A (UNIV DALIAN MARITIME) 21. September 2018 (2018-09-21) | 1,3-5, 7-9 | INV. G01S5/00 |
| Y | * Absatz [0005] * <br> * Absatz [0009] * <br> * Absatz [0011] * <br> * Absatz [0017] - Absatz [0020] * <br> * Absatz [0039] * <br> ----- | 2,6,10 | G01S5/02 <br> G01S19/48 |
| Y | CN 110 221 319 A (UNIV DALIAN MARITIME) 10. September 2019 (2019-09-10) * Absatz [0006] - Absatz [0008] * * Absatz [0038] - Absatz [0040] * ----- | 2,6,10 | |
| A | US 2018/149727 A1 (OSTREM TOR EIRIK [US]) 31. Mai 2018 (2018-05-31) * das ganze Dokument * ----- | 1-10 | |

**RECHERCHIERTE SACHGEBIETE (IPC)**

**G01S**

Der vorliegende Recherchenbericht wurde für alle Patentansprüche erstellt

| Recherchenort | Abschlußdatum der Recherche | Prüfer |
|---|---|---|
| **München** | **12. Januar 2023** | **Hekmat, Taymoor** |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

.......................................................................................

& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

**EP 22 19 0909**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**12-01-2023**

| Im Recherchenbericht angeführtes Patentdokument | Datum der Veröffentlichung | Mitglied(er) der Patentfamilie | Datum der Veröffentlichung |
|---|---|---|---|
| CN 108562923 A | 21-09-2018 | KEINE | |
| CN 110221319 A | 10-09-2019 | KEINE | |
| US 2018149727 A1 | 31-05-2018 | US 2018149727 A1<br>WO 2018102454 A1 | 31-05-2018<br>07-06-2018 |

EPO FORM P0461

Für nähere Einzelheiten zu diesem Anhang : siehe Amtsblatt des Europäischen Patentamts, Nr.12/82

**EP 4 137 837 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AUS L. GRUNDHÖFER ; S. GEWIES.** R-Mode receiver development for medium frequency signals. *Scientific Journals of the Maritime University of Szczecin,* 2018, vol. 56 (128), 57-62

- **M. WIRSING ; A. DAMMANN ; R. RAULEFS.** Designing a Ranging Signal for use with VDE R-Mode. *2020 IEEE/ION Position, Location and Navigation Symposium (PLANS),* 2020, 822-826